# EUROPÄISCHE PATENTSCHRIFT

(11) **EP 3 938 231 B1**
(45) Veröffentlichungstag und Bekanntmachung des Hinweises auf die Patenterteilung: **27.09.2023**
(21) Anmeldenummer: 20708413.8
(22) Anmeldetag: 11.02.2020
(51) Int. Cl.: B60K 6/387, F16D 25/08

(54) **HYBRIDMODUL MIT TRENNKUPPLUNG**
HYBRID MODULE HAVING A DISCONNECT CLUTCH
MODULE HYBRIDE POURVU D'UN EMBRAYAGE DE COUPURE

(30) Priorität: 15.03.2019 DE 102019106653
(43) Veröffentlichungstag der Anmeldung: 19.01.2022
(73) Patentinhaber: Schaeffler Technologies AG & Co. KG, 91074 Herzogenaurach (DE)
(72) Erfinder: TREFFEISEN, Florian, 76185 Karlsruhe (DE); FINKENZELLER, Marc, 77723 Gengenbach (DE)
(86) Internationale Anmeldenummer: PCT/DE2020/100087
(87) Internationale Veröffentlichungsnummer: WO 2020/187354

(56) Entgegenhaltungen:
- EP-A2- 2 827 479
- DE-A1-102013 213 992
- DE-A1-102015 225 421

## Beschreibung

Die Erfindung betrifft ein Hybridmodul für einen Antriebsstrang eines (Hybrid-) Kraftfahrzeugs, mit einer Eingangswelle, wie einer Kurbelwelle, die drehmomentübertragend mit einer ersten Antriebsmaschine, insbesondere einer Verbrennungskraftmaschine oder einer E-Maschine, verbindbar ist, mit einer der Eingangswelle im Drehmomentenfluss nachgelagerten Ausgangswelle, die vorzugsweise drehmomentübertragend mit einer zweiten Antriebsmaschine, insbesondere einer E-Maschine, verbindbar ist, mit einer Trennkupplung, insbesondere einer Impulskupplung, die die Eingangswelle und die Ausgangswelle zur Drehmomentübertragung schaltbar verbindet, mit einer Betätigungseinrichtung zum Betätigen der Trennkupplung und mit einem der Trennkupplung im Drehmomentenfluss nachgelagerten Drehschwingungsdämpfer zum Reduzieren von Drehungleichförmigkeiten.

Aus dem Stand der Technik sind bereits Hybridmodule bekannt. Zum Beispiel offenbart die nachveröffentlichte DE 10 2018 103 255 A1 ein Hybridmodul mit einem Drehmomenteingangsbauteil, das vorgesehen ist, um von einem ersten Antriebsaggregat angetrieben zu werden, mit einem im Drehmomentenfluss nachgelagerten, als Abtriebselement wirkenden Drehmomentausgangsbauteil, wobei das Drehmomenteingangsbauteil und das Drehmomentausgangsbauteil über eine schaltbare Kupplung drehmomentübertragend verbindbar sind, und mit einem Drehschwingungsdämpfer/Torsionsschwingungsdämpfer zum Reduzieren von Drehungleichförmigkeiten, der der schaltbaren Kupplung im Drehmomentenfluss nachgelagert ist, wobei das Drehmomentausgangsbauteil als ein koaxial zu dem Drehmomenteingangsbauteil angeordneter Endloszugmittelträger zum Einleiten vom Drehmoment eines zweiten Antriebsaggregats, das achsparallel zu dem Drehmomenteingangsbauteil angeordnet ist, ausgebildet ist.

Der Stand der Technik hat jedoch immer den Nachteil, dass das Kupplungsbetätigungssystem für die Trennkupplung an einer Motorrückwand abgestützt wird, was jedoch zu einer erhöhten Belastung der Eingangswellenlagerung führt. Dadurch werden die Betätigungskräfte durch die Eingangswellenlagerung begrenzt. Zudem muss die Trennkupplung sehr hohe Wechselmomente übertragen, wenn sie keine primärseitige Massenträgheit und/oder Dämpfung aufweist.

Aus der DE 10 2015 225 421 A1 ist ein Hybridmodul bekannt, das auf den Oberbegriff des Anspruchs 1 lesbar ist.

Es ist Aufgabe der Erfindung, die Nachteile aus dem Stand der Technik zu vermeiden oder wenigstens zu mildern. Insbesondere soll ein Hybridmodul bereitgestellt werden, das auch hohe Betätigungskräfte zulässt. Weiterhin soll eine Geräuschbildung möglichst reduziert werden.

Diese Aufgabe wird erfindungsgemäß durch ein Hybridmodul gemäß Anspruch 1 gelöst, wobei die Betätigungseinrichtung über ein erstes Lager direkt auf der Eingangswelle gelagert ist. Die Betätigungseinrichtung wird also so über die Eingangswelle abgestützt, dass der Kraftfluss innerhalb, d.h. intern, im Kupplungssystem verbleibt.

Dies hat den Vorteil, dass die Betätigungskräfte der Betätigungseinrichtung direkt auf die Eingangswelle übertragen werden, so dass andere Lagerungen nicht beeinflusst werden. Insbesondere werden andere Lagerungen nicht durch die Lagerung der Betätigungseinrichtung zusätzlich belastet. Dadurch werden die Betätigungskräfte nicht durch die Auslegung der anderen Lagerungen begrenzt.

Vorteilhafte Ausführungsformen sind in den Unteransprüchen beansprucht und werden nachfolgend näher erläutert.

Die Trennkupplung besitzt erfindungsgemäß eine Druckplatte und zumindest eine Kupplungsscheibe Beispielsweise kann die Trennkupplung als eine (Einscheiben-)Reibkupplung ausgebildet sein. Gemäß einer bevorzugten Weiterbildung kann die Trennkupplung als eine "normally-closed-Kupplung" ausgebildet sein. Dies ist besonders vorteilhaft, wenn die erste Antriebsmaschine überwiegend an den Antriebsstrang angekoppelt ist. Alternativ kann die Trennkupplung als eine "normally-open-Kupplung" ausgebildet sein.

Gemäß einer bevorzugten Ausführungsform kann die Betätigungseinrichtung eine Tellerfeder aufweisen. Die Tellerfeder ist vorzugsweise so angeordnet, dass sie eine Anpresskraft für die Druckplatte bereitstellt. Ist die Trennkupplung als eine "normally-closed-Kupplung" ausgebildet, hält die Tellerfeder die Druckplatte in einer geschlossenen Stellung und stellt eine Anpresskraft bereit. Ist die Trennkupplung als eine "normally-open-Kupplung" ausgebildet, wird die Druckplatte entgegen der Federkraft der Tellerfeder betätigt und durch die Federkraft der Tellerfeder in ihre unbetätigte Position zurückgestellt.

In einer bevorzugten Ausführungsform kann die Betätigungseinrichtung eine Hebelfeder aufweisen. Die Hebelfeder betätigt die Trennkupplung, indem sie ein Ausrücken eines Betätigungslagers mit einer axialen Verschiebung der Druckplatte koppelt.

Das Hybridmodul weist ein zweites Lager auf, über das die Druckplatte und/oder der Drehschwingungsdämpfer auf der Eingangswelle gelagert sind. Insbesondere wird ein Unterzusammenbau über die Eingangswelle abgestützt.

Erfindungsgemäß ist die Eingangswelle mehrteilig ausgebildet und weist ein Adapterbauteil und ein von dem Adapterbauteil separat ausgebildetes Trägerbauteil auf. Dadurch lässt sich das Hybridmodul einfacher montieren. Das erste Lager ist auf dem Adapterbauteil und das zweite Lager auf dem Trägerbauteil angeordnet. Das heißt, dass die beiden Lager direkt auf der Eingangswelle angeordnet sind, so dass die Lagerkräfte des einen Lagers nicht über das andere Lager abgestützt werden müssen. Dadurch können die Lager geringer dimensioniert werden.

Gemäß einer bevorzugten Ausführungsform kann die Betätigungseinrichtung angeordnet sein, dass Betätigungskräfte der Betätigungseinrichtung teilweise über das erste Lager und teilweise über das zweite Lager abgestützt werden. Insbesondere erfolgt eine Betätigungskraftabstützung über eine Hebelfeder, eine Auflage am und durch einen Kupplungsdeckel in Richtung zu dem zweiten Lager und von dort durch die Hirthverzahnung. Somit werden die Betätigungskräfte intern im Kupplungsbetätigungssystem weitergegeben und nicht vollständig auf umliegende Bauteile, insbesondere Lager, übertragen. Das zweite Lager ist also ein Teil der Abstützung, wird aber weniger belastet, da das erste Lager direkt auf der Kurbelwelle angeordnet ist.

Gemäß einer bevorzugten Ausführungsform kann die Druckplatte an dem Drehschwingungsdämpfer angebracht sein, insbesondere fest mit dem Drehschwingungsdämpfer verbunden sein. So können die Kräfte von der Druckplatte an den Drehschwingungsdämpfer übertragen werden.

Gemäß einer vorteilhaften Weiterbildung der bevorzugten Ausführungsform kann die Kupplungsscheibe fest mit der Eingangswelle verbunden sein. Besonders bevorzugt ist es, wenn die Kupplungsscheibe drehfest und axialfrei, d.h. nicht über eine Verzahnung, an der Eingangswelle befestigt ist, da so eine besonders spielarme Verbindung bereitgestellt wird.

Gemäß einer anderen bevorzugten Ausführungsform kann die Druckplatte an der Eingangswelle angebracht, insbesondere fest mit der Eingangswelle verbunden sein. So wird ein Kraftfluss der Betätigungseinrichtung und der Trennkupplung intern geschlossen, was besonders vorteilhaft für die Belastung des Hybridmoduls ist.

Gemäß einer vorteilhaften Weiterbildung der anderen bevorzugten Ausführungsform kann die Kupplungsscheibe fest mit dem Drehschwingungsdämpfer verbunden sein. Besonders bevorzugt ist es, wenn die Kupplungsscheibe drehfest und axialfrei, d.h. nicht über eine Verzahnung, an dem Drehschwingungsdämpfer befestigt ist, da so eine besonders spielarme Verbindung bereitgestellt wird.

Zudem ist es von Vorteil, wenn die Kupplungsscheibe eine Einstellschraube aufweist, mittels der eine axiale Position der Kupplungsscheibe relativ zu der Druckplatte einstellbar ist. Dadurch kann auch betriebsbedingter Verschleiß von Kupplungsbelägen ausgeglichen werden, was sich vorteilhaft auf die Lebensdauer der Trennkupplung auswirken kann.

Gemäß einer bevorzugten Ausführungsform können das Adapterbauteil und das Trägerbauteil über eine Hirth-Verzahnung drehmomentübertragend miteinander verbunden sein. So lässt sich das Trägerbauteil, insbesondere zusammen mit dem Unterzusammenbau, besonders einfach montieren. So kann das Trägerbauteil, auf dem sich die Druckplatte, der Drehschwingungsdämpfer und die Kupplungsscheibe abstützen montiert werden. Eine axiale Position des Adapterbauteils und des Trägerbauteils zueinander kann beispielsweise durch eine Zentralschraube festgelegt werden.

Mit anderen Worten betrifft die Erfindung eine Trennkupplung für einen Hybridantriebsstrang eines Kraftfahrzeugs. Um eine Verteilung der Betätigungskräfte der Trennkupplung intern, d.h. auf die Trennkupplung selbst, zu beschränken, wird ein erfindungsgemäßes Hybridmodul bereitgestellt. In einer ersten Ausführungsform ist eine Druckplatte fest mit einem Drehschwingungsdämpfer, insbesondere einem Schwungrad, verbunden, und eine Kupplungsscheibe ist fest mit der Eingangswelle, insbesondere der Kurbelwelle, verbunden. Ein Kupplungsbetätigungssystem ist auf der Eingangswelle durch ein Lager gelagert. In einer zweiten Ausführungsform ist eine Druckplatte fest mit einer Eingangswelle verbunden, und eine Kupplungsscheibe ist fest mit einem Drehschwingungsdämpfer verbunden. Ein Kupplungsbetätigungssystem ist auf der Eingangswelle durch ein Lager gelagert.

Die Erfindung wird nachfolgend mit Hilfe von Zeichnungen erläutert. Es zeigen:
Fig. 1 eine schematische Längsschnittdarstellung eines erfindungsgemäßen Hybridmoduls in einer ersten Ausführungsform, und
Fig. 2 eine schematische Längsschnittdarstellung des Hybridmoduls in einer zweiten Ausführungsform.

Die Figuren sind lediglich schematischer Natur und dienen ausschließlich dem Verständnis der Erfindung. Die gleichen Elemente sind mit denselben Bezugszeichen versehen. Die Merkmale der einzelnen Ausführungsformen können untereinander ausgetauscht werden.

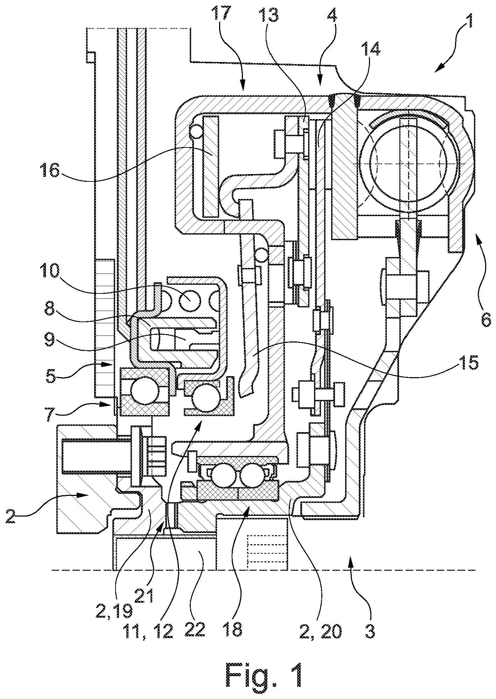

Fig. 1 zeigt ein erfindungsgemäßes Hybridmodul 1 für einen Antriebsstrang eines Kraftfahrzeugs. Das Hybridmodul 1 weist eine Eingangswelle 2 auf, die drehmomentübertragend mit einer ersten Antriebsmaschine, wie einer Verbrennungskraftmaschine, verbindbar ist. Die Eingangswelle 2 wird in den dargestellten Ausführungsformen durch eine Kurbelwelle der Verbrennungskraftmaschine gebildet. Das Hybridmodul 1 weist eine Ausgangswelle 3 auf, die der Eingangswelle 2 im Drehmomentenfluss nachgelagert angeordnet ist. Die Ausgangswelle 3 kann beispielsweise mit einer zweiten Antriebsmaschine, wie einer E-Maschine, drehmomentübertragend verbindbar sein.

Das Hybridmodul weist eine Trennkupplung 4 auf, die die Eingangswelle 2 und die Ausgangswelle 3 zur Drehmomentübertragung schaltbar verbindet. Die Trennkupplung 4 ist insbesondere als eine Impulskupplung ausgebildet. In den dargestellten Ausführungsformen ist die Trennkupplung 4 als eine Einscheiben-Reibkupplung ausgebildet. Die Trennkupplung 4 kann aber auch als eine Lamellenkupplung ausgebildet sein, auch wenn dies nicht dargestellt ist. Die Trennkupplung 4 dient zum An- und Abkoppeln der ersten Antriebsmaschine vom Antriebsstrang. Die Trennkupplung 4 wird über eine Betätigungseinrichtung 5 betätigt. In den dargestellten Ausführungsformen ist die Betätigungseinrichtung 5 als ein konzentrisches Kupplungsausrücksystem, insbesondere als ein konzentrischer Kupplungsnehmerzylinder, ausgebildet.

Das Hybridmodul 1 weist einen Drehschwingungsdämpfer 6 zum Reduzieren von Drehungleichförmigkeiten auf. Der Drehschwingungsdämpfer 6 ist im Drehmomentenfluss der Trennkupplung 4 nachgelagert angeordnet. In den dargestellten Ausführungsformen ist der Drehschwingungsdämpfer 6 im Drehmomentenfluss zwischen der Trennkupplung 4 und der Ausgangswelle 3 angeordnet.

Die Betätigungseinrichtung 5 ist über ein erstes Lager 7 direkt auf der Eingangswelle 2 gelagert. Das erste Lager 7 ist als ein Axialschrägkugellager ausgebildet. Das erste Lager 7 dient zum Abstützen der Betätigungskräfte der Betätigungseinrichtung 5.

Die Betätigungseinrichtung 5 weist ein Gehäuse 8 und einen axial verschieblich in dem Gehäuse 8 angeordneten Kolben 9 auf. Zwischen dem Gehäuse 8 und dem Kolben 9 wird ein Druckraum ausgebildet, der mit Hydraulikmittel druckbeaufschlagbar ist. Wird der Druckraum mit Druck beaufschlagt, wird der Kolben 9 axial entgegen der Vorspannkraft einer Rückstellfeder 10 verschoben. Die axiale Verschiebung des Kolbens 9 ist mit einer axialen Verlagerung eines Betätigungslagers 11 gekoppelt, so dass das Betätigungslager 11 ausgerückt wird, wenn der Druckraum mit Druck beaufschlagt wird. Das Betätigungslager 11 ist in den dargestellten Ausführungsformen als ein Axialschrägkugellager 12 ausgebildet.

Die Trennkupplung 4 weist eine Druckplatte 13 und zumindest eine Kupplungsscheibe 14 auf. Die Druckplatte 13 ist axial verschieblich gelagert. Wird die Druckplatte 13 in Axialrichtung gegen die Kupplungsscheibe 14 gedrückt, erzeugt sie einen Kraftschluss zwischen der Kupplungsscheibe 14 und einem als Gegendruckplatte dienenden Kupplungsbestandteil, so dass eine Drehmomentübertragung ermöglicht ist. In der ersten in Fig. 1 dargestellten Ausführungsform ist die Kupplungsscheibe 14 fest mit der Eingangswelle 2 verbunden. In der ersten in Fig. 1 dargestellten Ausführungsform ist die Druckplatte 13 an dem Drehschwingungsdämpfer 6 angebunden. Das heißt, dass in dem Hybridmodul 1 der ersten Ausführungsform bei geschlossener Trennkupplung 4 ein Kraftschluss zwischen der eingangswellenfesten Kupplungsscheibe 14 und der ausgangswellenfesten Druckplatte 13 bzw. dem Drehschwingungsdämpfer 6 vorliegt. Über eine Einstellschraube kann eine axiale Position der Kupplungsscheibe 14 relativ zur Druckplatte 13 eingestellt werden.

In der ersten in Fig. 1 dargestellten Ausführungsform ist die Trennkupplung 4 als eine "normally-closed-Kupplung" ausgebildet. Das heißt, dass die Trennkupplung 4 in einem unbetätigten Zustand geschlossen ist. Zur Betätigung der Trennkupplung 4 wird bei einer Verlagerung des Betätigungslagers 11 eine an dem Betätigungslager 11 anliegende Hebelfeder 15 verschwenkt. Die Hebelfeder 15 ist mit der Druckplatte 13 verbunden, so dass die Druckplatte 13 durch die Verschwenkung der Hebelfeder 15 in Axialrichtung von der Kupplungsscheibe 14 weg verlagert wird und die Trennkupplung 4 geöffnet wird. Dabei wird die Druckplatte 13 durch die Federkraft einer Tellerfeder 16 im unbetätigten Zustand gegen die Kupplungsscheibe 14 gedrückt. Zur Verstellung, d.h. zum Öffnen, wird die Druckplatte 13 entgegen der Federkraft verlagert. Alternativ kann die Trennkupplung auch als eine "normally-open-Kupplung" ausgebildet sein, auch wenn dies nicht dargestellt ist. Alternativ kann die Trennkupplung 4 auch ohne die Hebelfeder 15 betätigt werden.

Ein Unterzusammenbau 17 ist über ein zweites Lager 18 auf der Eingangswelle 2 gelagert. In der ersten in Fig. 1 dargestellten Ausführungsform werden der Drehschwingungsdämpfer 6 und die Druckplatte 13 durch das zweite Lager 18 abgestützt. Das zweite Lager 18 ist in den dargestellten Ausführungsformen als ein Doppel-Axialschrägkugellager ausgebildet. Das zweite Lager 18 wird auch als ein Eingangswellenlager bzw. ein Kurbelwellenlager bezeichnet.

Die Betätigungskräfte der Betätigungseinrichtung 5 werden über das Betätigungslager 11, über die Hebelfeder 15, die Druckplatte 13, die Kupplungsscheibe 14, die Eingangswelle 2 und das erste Lager 7 in einem internen geschlossenen Kraftfluss geführt. Die Betätigungskräfte werden also nicht über das zweite Lager 18 geführt.

Die Eingangswelle 2 ist mehrteilig aufgebaut. Die Eingangswelle 2 weist ein Adapterbauteil 19 und ein Trägerbauteil 20 auf. Das Adapterbauteil 19 ist über eine Hirth-Verzahnung 21 mit dem Trägerbauteil 20 drehmomentübertragend verbunden. Die Kupplungsscheibe 14 ist an dem Trägerbauteil 20 angebracht. Das zweite Lager 18 ist auf dem Trägerbauteil 20 angeordnet, insbesondere auf einer radialen Außenseite des Trägerbauteils 20 angeordnet. Das erste Lager 7 ist auf dem Adapterbauteil 19 angeordnet, insbesondere auf einer radialen Außenseite des Adapterbauteils 19. Das Adapterbauteil 19 und das Trägerbauteil 20 sind über eine Zentralschraube 22 in Axialrichtung zueinander festgelegt.

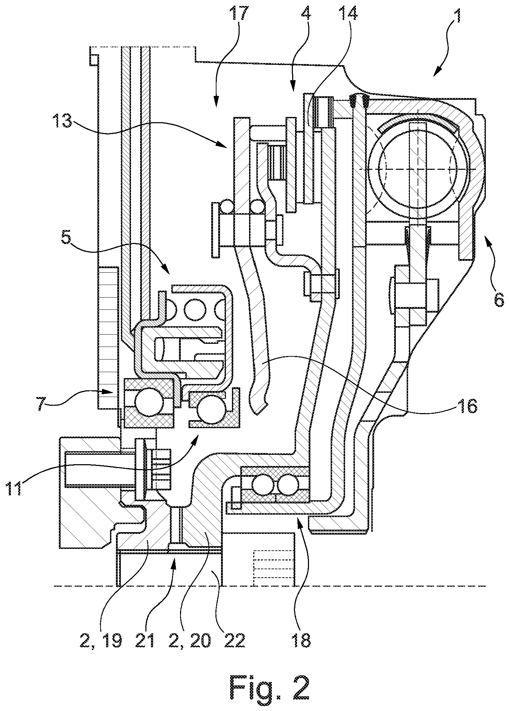

Fig. 2 zeigt das Hybridmodul 1 in einer zweiten Ausführungsform. Die zweite Ausführungsform entspricht im Wesentlichen der ersten Ausführungsform, abgesehen von der Anbindung der Kupplungsscheibe 14 und der Druckplatte 13.

Die Eingangswelle 2 ist mehrteilig ausgebildet. Die Eingangswelle 2 weist das Adapterbauteil 19 und das Trägerbauteil 20 auf. Die Druckplatte 13 ist an der Eingangswelle 2, insbesondere an dem Trägerbauteil 20, angebunden. Die Kupplungsscheibe 14 ist fest mit dem Drehschwingungsdämpfer 6 verbunden. Der Drehschwingungsdämpfer 6 und die Kupplungsscheibe 14 sind drehbar über das zweite Lager 18 auf dem Trägerbauteil 20, insbesondere auf einer radialen Innenseite des Trägerbauteils 20, gelagert. Über eine (nicht dargestellte) Einstellschraube kann eine axiale Position der Kupplungsscheibe 14 relativ zur Druckplatte 13 eingestellt werden.

Zur Betätigung der Trennkupplung 4 wird das Betätigungslager 11 ausgerückt. Dadurch wird die Druckplatte 13 in Axialrichtung verlagert und die als "normally-closed-Kupplung" ausgebildete Trennkupplung 4 geöffnet.

### Bezugszeichenliste

1 Hybridmodul
2 Eingangswelle
3 Ausgangswelle
4 Trennkupplung
5 Betätigungseinrichtung
6 Drehschwingungsdämpfer
7 erstes Lager
8 Gehäuse
9 Kolben
10 Rückstellfeder
11 Betätigungslager
12 Axialschrägkugellager
13 Druckplatte
14 Kupplungsscheibe
15 Hebelfeder
16 Tellerfeder
17 Unterzusammenbau
18 zweites Lager
19 Adapterbauteil
20 Trägerbauteil
21 Hirth-Verzahnung
22 Zentralschraube

## Patentansprüche

1. Hybridmodul (1) für einen Antriebsstrang eines Kraftfahrzeugs, mit einer Eingangswelle (2), die drehmomentübertragend mit einer ersten Antriebsmaschine verbindbar ist, mit einer der Eingangswelle (2) im Drehmomentenfluss nachgelagerten Ausgangswelle (3), mit einer Trennkupplung (4), die die Eingangswelle (2) und die Ausgangswelle (3) zur Drehmomentübertragung schaltbar verbindet, mit einer Betätigungseinrichtung (5) zum Betätigen der Trennkupplung (4) und mit einem der Trennkupplung (4) im Drehmomentenfluss nachgelagerten Drehschwingungsdämpfer (6) zum Reduzieren von Drehungleichförmigkeiten, wobei die Betätigungseinrichtung (5) über ein erstes Lager (7) direkt auf der Eingangswelle (2) gelagert ist, **dadurch gekennzeichnet, dass** die Trennkupplung (4) eine Druckplatte (13) und zumindest eine Kupplungsscheibe (14) besitzt, wobei das Hybridmodul (1) ein zweites Lager (18) aufweist, über das die Druckplatte (13) und/oder der Drehschwingungsdämpfer (6) auf der Eingangswelle (2) abgestützt sind, wobei die Eingangswelle mehrteilig ausgebildet ist und ein Adapterbauteil (19) und ein von dem Adapterbauteil (19) separat ausgebildetes Trägerbauteil (20) aufweist, wobei das erste Lager (7) auf dem Adapterbauteil (19) und das zweite Lager (18) auf dem Trägerbauteil (20) angeordnet ist.

2. Hybridmodul (1) nach Anspruch 1, **dadurch gekennzeichnet, dass** die Betätigungseinrichtung (5) so angeordnet ist, dass Betätigungskräfte der Betätigungseinrichtung (5) teilweise über das erste Lager (7) und teilweise über das zweite Lager (18) abgestützt sind.

3. Hybridmodul (1) nach Anspruch 1 oder 2, **dadurch gekennzeichnet, dass** die Druckplatte (13) an dem Drehschwingungsdämpfer (6) angebunden ist.

4. Hybridmodul (1) nach einem der Ansprüche 1 bis 3, **dadurch gekennzeichnet, dass** die Kupplungsscheibe (14) fest mit der Eingangswelle (2) verbunden ist.

5. Hybridmodul (1) nach Anspruch 1 oder 2, **dadurch gekennzeichnet, dass** die Druckplatte (13) an der Eingangswelle (2) angebunden ist.

6. Hybridmodul (1) nach einem der Ansprüche 1 bis 3, **dadurch gekennzeichnet, dass** die Kupplungsscheibe (14) fest mit dem Drehschwingungsdämpfer (6) verbunden ist.

7. Hybridmodul (1) nach einem der Ansprüche 1 bis 6, **dadurch gekennzeichnet, dass** die Kupplungsscheibe (14) eine Einstellschraube aufweist, mittels der eine axiale Position der Kupplungsscheibe (14) relativ zu der Druckplatte (13) einstellbar ist.

8. Hybridmodul (1) nach einem der Ansprüche 1 bis 7, **dadurch gekennzeichnet, dass** das Adapterbauteil (19) und das Trägerbauteil (20) über eine Hirth-Verzahnung (21) drehmomentübertragend miteinander verbunden sind.

## Claims

1. A hybrid module (1) for a drive train of a motor vehicle, having an input shaft (2), which can be connected to a first drive machine in a torque-transmitting manner, having an output shaft (3) situated downstream of the input shaft (2) in the torque flow, having a disconnect clutch (4) which switchably connects the input shaft (2) and the output shaft (3) for torque transmission, having an actuation device (5) for actuating the disconnect clutch (4), and having a torsional vibration damper (6) situated downstream of the disconnect clutch (4) in the torque flow to reduce rotational irregularities, wherein the actuation device (5) is mounted directly on the input shaft (2) via a first bearing (7), **characterised in that** the disconnect clutch (4) has a pressure plate (13) and at least one clutch disc (14), wherein the hybrid module (1) has a second bearing (18), via which the pressure plate (13) and/or the torsional vibration damper (6) is supported on the input shaft (2), wherein the input shaft is formed in several parts and has an adapter component (19) and a carrier component (20) formed separately from the adapter component (19), wherein the first bearing (7) is arranged on the adapter component (19) and the second bearing (18) is arranged on the carrier component (20).

2. The hybrid module (1) according to claim 1, **characterised in that** the actuation device (5) is arranged such that actuation forces of the actuation device (5) are partly supported via the first bearing (7) and partly supported via the second bearing (18).

3. The hybrid module (1) according to claim 1 or 2, **characterised in that** the pressure plate (13) is attached to the torsional vibration damper (6).

4. The hybrid module (1) according to any one of claims 1 to 3, **characterised in that** the clutch disc (14) is firmly connected to the input shaft (2).

5. The hybrid module (1) according to claim 1 or 2, **characterised in that** the pressure plate (13) is attached to the input shaft (2).

6. The hybrid module (1) according to any one of claims 1 to 3, **characterised in that** the clutch disc (14) is firmly connected to the torsional vibration damper (6).

7. The hybrid module (1) according to any one of claims 1 to 6, **characterised in that** the clutch disc (14) has an adjusting screw, by means of which an axial position of the clutch disc (14) can be adjusted relative to the pressure plate (13).

8. The hybrid module (1) according to any one of claims 1 to 7, **characterised in that** the adapter component (19) and the carrier component (20) are connected to one another in a torque-transmitting manner via a Hirth coupling (21).

## Revendications

1. Module hybride (1) pour une chaîne cinématique d'un véhicule automobile, pourvu d'un arbre d'entrée (2) qui peut être relié de manière à transmettre un couple à une première machine d'entraînement, d'un arbre de sortie (3) placé en aval de l'arbre d'entrée (2) dans le flux de couple, d'un embrayage de coupure (4) qui relie l'arbre d'entrée (2) et l'arbre de sortie (3) de manière commutable pour la transmission de couple, d'un dispositif d'actionnement (5) pour actionner l'embrayage de coupure (4) et d'un amortisseur de vibrations de torsion (6) placé en aval de l'embrayage de coupure (4) dans le flux de couple pour réduire les irrégularités de rotation, le dispositif d'actionnement (5) étant monté directement sur l'arbre d'entrée (2) par l'intermédiaire d'un premier palier (7), **caractérisé en ce que** l'embrayage de coupure (4) possède une plaque de pression (13) et au moins un disque d'embrayage (14), le module hybride (1) présentant un second palier (18) par l'intermédiaire duquel la plaque de pression (13) et/ou l'amortisseur de vibrations de torsion (6) sont soutenus sur l'arbre d'entrée (2), l'arbre d'entrée étant réalisé en plusieurs parties et présentant un élément adaptateur (19) et un élément support (20) réalisé séparément de l'élément adaptateur (19), le premier palier (7) étant agencé sur l'élément adaptateur (19) et le second palier (18) sur l'élément support (20).

2. Module hybride (1) selon la revendication 1, **caractérisé en ce que** le dispositif d'actionnement (5) est agencé de façon à ce que les forces d'actionnement du dispositif d'actionnement (5) soient partiellement supportées par l'intermédiaire du premier palier (7) et partiellement supportées par l'intermédiaire du second palier (18).

3. Module hybride (1) selon la revendication 1 ou 2, **caractérisé en ce que** la plaque de pression (13) est reliée à l'amortisseur de vibrations de torsion (6).

4. Module hybride (1) selon l'une quelconque des revendications 1 à 3, **caractérisé en ce que** le disque d'embrayage (14) est relié solidaire à l'arbre d'entrée (2).

5. Module hybride (1) selon la revendication 1 ou 2, **caractérisé en ce que** la plaque de pression (13) est reliée à l'arbre d'entrée (2).

6. Module hybride (1) selon l'une quelconque des revendications 1 à 3, **caractérisé en ce que** le disque d'embrayage (14) est reliée solidaire à l'amortisseur de vibrations de torsion (6).

7. Module hybride (1) selon l'une quelconque des revendications 1 à 6, **caractérisé en ce que** le disque d'embrayage (14) présente une vis de réglage, au moyen de laquelle une position axiale du disque d'embrayage (14) peut être réglée par rapport à la plaque de pression (13).

8. Module hybride (1) selon l'une quelconque des revendications 1 à 7, **caractérisé en ce que** l'élément adaptateur (19) et l'élément support (20) sont reliés l'un à l'autre par l'intermédiaire d'une denture Hirth (21) de manière à transmettre le couple.
